(19) Europäisches Patentamt
European Patent Office
Office européen des brevets

(11) **EP 2 202 932 A1**

(12) **EUROPEAN PATENT APPLICATION**

(43) Date of publication:
**30.06.2010 Bulletin 2010/26**

(51) Int Cl.:
***H04L 27/26*** (2006.01)   ***H04L 25/02*** (2006.01)

(21) Application number: **08306018.6**

(22) Date of filing: **24.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Thomson Licensing**
**92443 Issy-les-Moulineaux Cedex (FR)**

(72) Inventors:
• **Du, Yongjiu**
 **Haidian District,**
 **100085 Beijing (CN)**

• **Liu, Peng**
 **100085 Beijing (CN)**
• **Zou, Li**
 **Haidian District,**
 **100088 Beijing (CN)**

(74) Representative: **Ruellan-Lemonnier, Brigitte**
**Thomson**
**1, rue Jeanne d'Arc**
**92443 Issy-les-Moulineaux Cedex (FR)**

(54) **A Method for Channel Estimation Based on PN Sequences**

(57)  A method of channel parameter extraction in a multipath environment allows timing synchronization and channel estimation to be performed. The method operates on pseudorandom (PN) noise sequences containing a cyclic prefix and a cyclic postfix by eliminating any interference peaks due to the prefix and postfix along with associated noise to allow characteristics of the channel to be determined.

Figure 8 : Flow chart of the iteration process

**Description**

FIELD OF THE INVENTION

The invention is about channel parameter detection in pseudorandom noise (PN) based digital communication systems. In these kinds of systems, a prefix and postfix are added to the PN sequence for synchronization.

BACKGROUND OF THE INVENTION

Nowadays, PN sequences are used frequently in various digital communication systems as a preamble, just as in spread spectrum systems, OFDM systems and similar systems. In order to suppress partial correlation noise, some of the PN sequences use a cyclic prefix and a cyclic postfix. This will present excellent channel impulse within a certain period. But another problem will be the interference correlation peaks generated by the prefix and postfix.

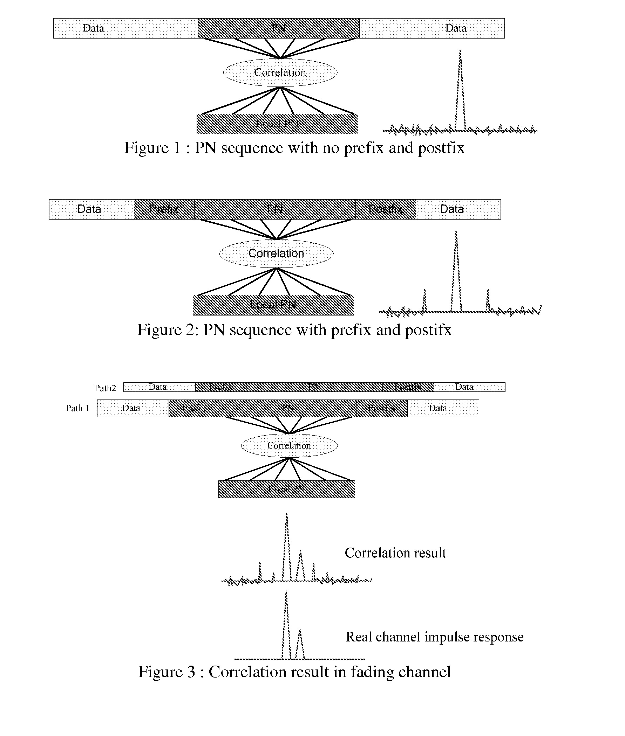

Figure1 shows an example where no prefix or postfix for the PN sequence are used. The correlation result will be one peak with a lot of noise off the peak. This noise will affect performance of the system, especially for fading channels.

Next, in Figure 2, a cyclic prefix and cyclic postfix for the PN sequence are used. The Chinese terrestrial broadcasting system (DTMB) is one example that uses this kind of PN sequence as a preamble. The noise suppression of the correlation result is much better. There is no partial correlation noise within a certain period around the center correlation peak. But on the other hand, we do not use the non-highest peaks on the left and on the right, and we can call them interference peaks.

In Figure 3, the channel is a fading channel. It is hard for the receiver to distinguish the interference peaks of the first path with the center peak of the second path.

In the receiver, it is desirable to detect the following parameters:

    1. The first path, which is the synchronization boundary.
    2. The last path, which should be found to measure the $T_{max}$ value, used for channel estimation to suppress the redundant noise.

But, as in Figure 3, one cannot tell which is the first path and which is the last path by the correlation result. In order to get a clear channel impulse response, the prefix and postfix peaks should be eliminated.

The channel impulse response estimation will be affected by the prefix and postfix of the PN sequence. The purpose of this invention is to solve the prefix and postfix interference problem and to detect the first path and the last path.

SUMMARY OF THE INVENTION

In this invention, a prefix and postfix eliminating and path detection method is proposed.

For the first step, we should get a clear channel impulse response. In the system using PN-based preamble as in Figure 2, a PN sequence is used for synchronization and channel estimation. A cyclic prefix and a cyclic postfix are added to suppress noise in fading channels. But the correlation peaks generated by the prefix and the postfix will interfere in distinguishing the first and the last path. So, a method of eliminating the interference peaks is proposed here. When the lengths of the main PN data, PN prefix and PN postfix are fixed, there will be relationships both in the delay time and in the amplitude between the interference peaks and the center peak. So, it is possible to eliminate the interference peaks iteratively.

Here, assume that the prefix and the postfix are shorter than the PN sequence. Then the center peak will be higher than the interference peaks. We can first detect the highest center peak, and then, according to the relationship between the center peak and its interference peaks, it is possible to eliminate its interference peaks. Then, the second largest path is similarly processed until we get the clear channel impulse response.

DETAILED DESCRIPTION OF THE INVENTION

The cyclic prefix and cyclic postfix are used to protect the data in the middle, but there are also drawbacks. In the frame structure system in Figure 2, a PN sequence is used for synchronization and channel estimation. The cyclic prefix and cyclic postfix is added to protect the center PN data, as shown in Figure 2. The two second-highest peaks on the left and on the right are regarded as interference peaks, both for channel estimation and for path detection.

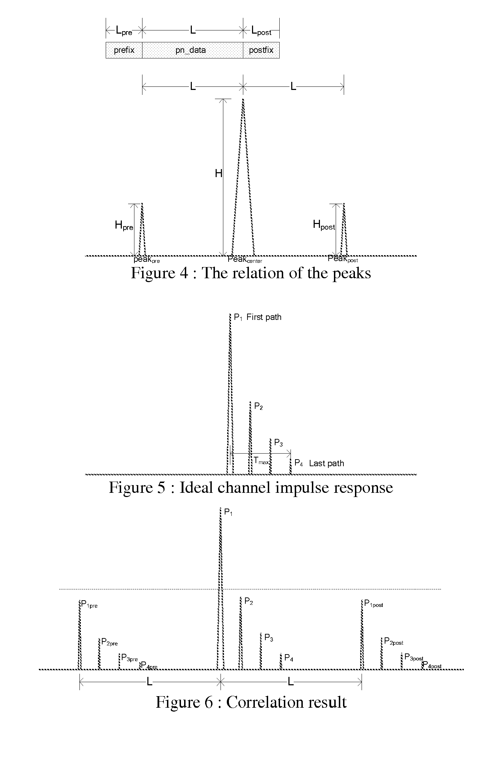

An iterative elimination method is proposed in this invention. Depending on the lengths of the prefix, the postfix, and the PN data in the middle, the center peak and the interference peaks have certain relationships. An example of these relationships is shown in Figure 4.

$L$ is the period of the PN data. $L_{pre}$ is the period of the prefix and $L_{post}$ is the period of the postfix.

As for the correlation result, there will be three peaks due to the existence of the prefix and the postfix.

The period between $Peak_{center}$ and its interference peaks is L, which is just the period of the PN data. The height of $peak_{pre}$ and $peak_{post}$ can be calculated as following:

$$H_{pre}=H*(L_{pre}/L) \qquad (1)$$

$$H_{post}=H*(L_{post}/L) \qquad (2)$$

Using the aforementioned relationships, the process can be illustrated with the example channel impulse response in Figure 5. Through correlation, calculate the original correlation result, including the center peaks and interference peaks, just as in Figure 6.

In order to remove the interference peaks generated by the prefix and postfix, we can divide the process into the following steps:

1. Detect the power of the highest peak $P_1$ in the first frame.

2. Then according to the power of $P_1$, set a threshold, which is used to distinguish the center peak and the interference peaks. It must be higher than $P_{1pre}$ and $P_{1post}$, and lower than $P_1$. This is shown by the line in Figure 6.

3. Then in the second frame, find the peaks larger than the threshold and record the value and the position of each peak detected. In Figure 6, only $P_1$ will be detected.

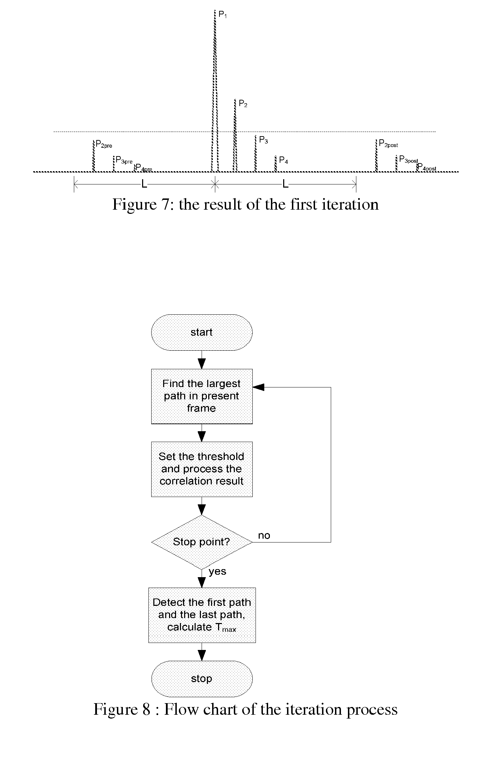

4. According to equation (1) and equation (2), $P_{1pre}$ and $P_{1post}$ can be eliminated. The result after elimination will be as shown in Figure 7.

5. Next, reset the threshold, and repeat the steps above until the stop point of the iteration. Then go to step 6.

6. According to the channel pattern and the SNR value, we can set the path detection threshold. It must be low enough to detect the low path in the fading channel, but it can not be too low to wrongly detect the noise as a path. Then use this threshold to find the position of the first path and the last path and to get the $T_{max}$ value.

Considering that the channel does not change fast in the terrestrial broadcasting transmission, it is fair to assume that the channel impulse responses are the same in several adjacent frames. So, one iteration can be done in one frame and this method does not need to store channel information which saves memory.

The iteration stop point could be set to a fixed number. It also could be set according to a required performance metric or to the SNR based on system design requirements.

Finally, the result of the iteration could be approximately shown as in Figure 5.

A general flow chart of the process can be drawn as Figure 8.

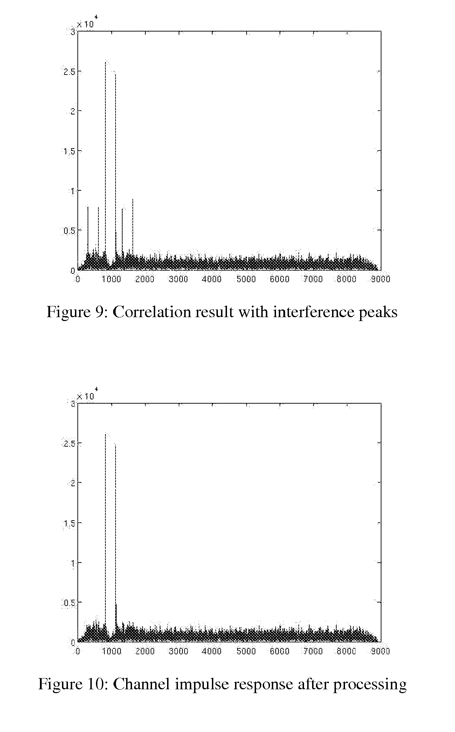

Figure 9 is the correlation result with the interference peaks in the fading channel. Figure 10 is the result after interference peak elimination.

This invention can be used for all digital communication systems with prefix or postfix PN sequences, or both. The synchronization and channel estimation need a clean channel impulse response. So for prefix and postfix PN systems, this invention can be used to eliminate the interference peaks.

The present description illustrates the principles of the invention. It will thus be appreciated that those skilled in the art will be able to devise various arrangements that, although not explicitly described or shown herein, embody the principles of the invention and are included within its spirit and scope.

All examples and conditional language recited herein are intended for pedagogical purposes to aid the reader in understanding the principles of the invention and the concepts contributed by the inventor to furthering the art, and are to be construed as being without limitation to such specifically recited examples and conditions.

Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means that can provide those functionalities as equivalent to those shown herein.

**Claims**

1. A method for channel parameter extraction comprising:

   receiving a pseudorandom number sequence having a cyclic prefix and cyclic postfix;
   filtering said received pseudorandom number sequence with a single matched filter;
   processing iteratively said matched filter output to remove the cyclic prefix and cyclic postfix using characteristics of the length of the pseudorandom noise sequence, the cyclic prefix and the cyclic postix;
   extracting at least one parameter from said processing step that is characteristic of the channel.

2. The method of Claim 1 wherein said parameter extracted is timing information related to at least one multipath signal.

3. The method of Claim 1, wherein said processing step comprises:

   detecting the power of the greatest magnitude peak of said matched filter output frequency spectrum;
   setting a threshold to distinguish said highest peak of matched filter output frequency spectrum from any interfering peaks from the cyclic prefix and cyclic postix;
   using said threshold in a subsequent frame to find peaks of greater magnitude than said threshold and using the value and position of each peak detected to eliminate those due to the cyclic prefix and cyclic postix;
   repeating said detecting, setting and eliminating steps to eliminate interfering peaks due to the cyclic prefix and postfix until a condition is reached.

4. The method of Claim 3, whereby said condition is the elimination of all interference peaks due to cyclic prefix and cyclic postfix.

5. The method of Claim 3, whereby said condition is the based on SNR.

6. The method of Claim 3, whereby said condition is based on a fixed number of iterations.

7. The method of Claim 3, whereby said condition is based on a performance metric.

Figure 1 : PN sequence with no prefix and postfix

Figure 2: PN sequence with prefix and postifx

Figure 3 : Correlation result in fading channel

Figure 4 : The relation of the peaks

Figure 5 : Ideal channel impulse response

Figure 6 : Correlation result

Figure 7: the result of the first iteration

Figure 8 : Flow chart of the iteration process

Figure 9: Correlation result with interference peaks

Figure 10: Channel impulse response after processing

**EUROPEAN SEARCH REPORT**

Application Number

EP 08 30 6018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUANGHUI LIU ET AL: "ITD-DFE Based Channel Estimation and Equalization in TDS-OFDM Receivers" IEEE TRANSACTIONS ON CONSUMER ELECTRONICS, vol. 53, no. 2, 2 May 2007 (2007-05-02), pages 304-309, XP011186740 IEEE SERVICE CENTER, NEW YORK, NY, US ISSN: 0098-3063 * abstract * Sections I-VI * figures 1-5 * | 1-7 | INV. H04L27/26 H04L25/02 |
| X | FANG YANG ET AL: "Channel Estimation for the Chinese DTTB System Based on a Novel Iterative PN Sequence Reconstruction" IEEE INTERNATIONAL CONFERENCE ON COMMUNICATIONS WORKSHOPS, 19 May 2008 (2008-05-19), - 23 May 2008 (2008-05-23) pages 285-289, XP031265248 NJ, USA ISBN: 978-1-4244-2052-0 * abstract * Sections I-V * figures 1,2 * | 1-7 | |
| X | FANG YANG ET AL: "Novel channel estimation method based on PN sequence reconstruction for Chinese DTTB system" IEEE TRANSACTIONS ON CONSUMER ELECTRONICS, vol. 54, no. 4, 1 November 2008 (2008-11-01), pages 1583-1589, XP011239717 NY, USA ISSN: 0098-3063 * abstract * Sections I-VI * figures 1,2 * | 1-7 | TECHNICAL FIELDS SEARCHED (IPC) H04L |

-/--

The present search report has been drawn up for all claims

| Place of search | Date of completion of the search | Examiner |
|---|---|---|
| The Hague | 7 September 2009 | Dhibi, Youssef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 08 30 6018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHIN-LIANG WANG ET AL: "An Optimized Joint Time Synchronization and Channel Estimation Scheme for OFDM Systems" IEEE VEHICULAR TECHNOLOGY CONFERENCE, 11 May 2008 (2008-05-11), - 14 May 2008 (2008-05-14) pages 908-912, XP031255660 NJ, USA ISBN: 978-1-4244-1644-8 * abstract * Sections I-IV * figures 1,2 * | 1-7 | |
| A | NICULESCU, MARIUS-CRISTIAN: "A solution for equalization in wireless channel communications" 11TH WSEAS INTERNATIONAL MULTICONFERENCE CSCC (CIRCUITS, SYSTEMS, COMMUNICATIONS, COMPUTERS), 26 July 2007 (2007-07-26), - 28 July 2007 (2007-07-28) pages 389-392, XP002544486 Crete Island, Greece * abstract * Sections 1-5 * figure 2 * | 1-7 | |

TECHNICAL FIELDS
SEARCHED (IPC)

The present search report has been drawn up for all claims

| Place of search | Date of completion of the search | Examiner |
|---|---|---|
| The Hague | 7 September 2009 | Dhibi, Youssef |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P04C01)